# EUROPEAN PATENT SPECIFICATION

(11) **EP 0 401 638 B1**
(45) Date of publication and mention of the grant of the patent: **10.08.1994**
(21) Application number: 90110095.8
(22) Date of filing: 28.05.1990
(51) Int. Cl.: H04N 7/08, H04N 7/12, H04N 11/08, H04N 11/02

(54) **Package structure and transmission of the information generated by a video signal encoder**
Paketstruktur und Übertragung der von einem Videosignal-Kodierer erzeugten Information
Structure de paquet et transmission d'information engendrée par un codeur de signal vidéo

(30) Priority: 07.06.1989 IT 2081089
(43) Date of publication of application: 12.12.1990
(73) Proprietor: ALCATEL ITALIA Società per Azioni, 20149 Milano (IT)
(72) Inventor: Barbero, Marzio, I-10100 Torino (IT); Cucchi, Silvio, I-20093 Gaggiano (MI) (IT)
(74) Representative: Strehl Schübel-Hopf Groening & Partner

(56) References cited:
- EP-A- 0 026 708
- US-A- 3 739 083
- US-A- 4 668 985
- US-A- 4 706 109
- FERNSEH- UND KINOTECHNIK, no. 10/1985, Heidelberg ULRICH MESSERSCHMID "Fernseh- normen fUr Rundfunk- satelliten" pages 472-480

## Description

The invention refers to the structure of an encoder (redundancy and bit rate reducer) for video signal, in which it is present more than one source generating the data, that can be for example the video data, the data related to the audio channels, the data describing the state of the encoder, etc., or if it necessary to have resort to the processing of the video information onto N parallel paths (being N equal or greather than 2). This last case appears owing to the technological limitations in the fulfilment of data processing devices or for simple reasons of convenience when the number of video samples present in the time unit at the encoder input is characterized by a very variable field and then it is suitable to have a modular structure. This is the case, for example, of the encoding of high definition television signals (HDTV), in which the generation speed of samples can be higher than 100 MHz (interleaved scanning) or at 200 MHz (progressive scanning). When the information processing is made onto N paths, it is necessary to organize the data so that, once the data are transmitted to the decoder, one can identify the path from which they arrive and to decode correctly the data. In the case in which the redundancy reduction systems are used, it is normal to use variable length codes that adapt the data flow to the entropy characterizing the source. Further it is used, in combination with the information holding variable length words, also the encoding of equal word sequences. In these cases the data generation speed can be greatly time-variable and this happens in each of N processing paths.

In pratice each path word as a data source having a different and time-variable speeds, and it is necessary that these data are shunted correctly. An organization suitable for solving these shunting problems is the package technics. Each processing path generates data packages supplied with an heading suitable for identifying them, in particular the heading holding the address of the origin path in the encoder, and the destination path in the decoder.

Further the organization of packaged data can be extended advantageosly in addition to the strictly video data, also to all tipical information of a television encoder: the lateral informations suitable for describing the device running state, numerical audio signals and eventual further data.

All above mentioned data are transmitted on a sole transmission path by means of the multiplexer that provides the interleaving of the data packages according to a prefixed time order based on priority criteria.

If all transmission data are organized in packages having a fixed dimension (all holding the same bit number) it is possible to assign a structure to the transmission frame, so that it is adapted to the packaged format and dimension and in consequence the transmission multiplexer placed on the channel shall show an optimal structure for this data organization.

The dimension of the package can be selected according to different criteria, but suitable for allowing the use of modular characteristics with which the devices are manufactured, suitable for different applications. The more important criteria are as follows: a sole dimension of the packages for the different information types, for different values of transmission speed on the channel and for different formats of the video input signal. An integral number of packages is hold in each transmission frame. Increasing the package dimensions, it is reduced the added redundancy owing to the package heading.

The common use of N paths for processing the informations and the data package structure allows notable advantages that are listed hereunder:
- modular structure of the encoder, that can be adapted to video sources characterized by very different generation speeds of samples. The control and interface members suitable for recognizing automatically the number of processors (processing paths) can be manufactured.
- a sole encoding device can work onto a sole video source at input using the N paths in parallel, or using a different input interface, onto more video signals attributing to each signal a subassembly of the N processors and the whole transmission capacity.
- multiplexing frame structure suitable for allowing the multiplexer adapation to the different channel transmission speeds and that are eventually time-variable.
- the modular structure allows to adapt the device to the technological development; for example, if the processing speed in each path can be doubled, it is sufficient to halve the number of processors joined in parallel, keeping practically invariable the remaining function blocks of the co-decoder and the frame structure.

The advantages of the present invention are particularly evidenced in the described case, in which the processing of the video signal is made by means of separated processors and further separated paths are used for transmitting the lateral information and for transmitting the audio signals. But the advantages of the invention are also appreciated when two sole paths must be multiplexed, these paths generating information with speeds (bit rate) shifted with one another, for example a path generates the video data with associated data related to the encoder state and a second path generates the data related to an audio signals series.

The invention is better explained in the following, making reference to a preferred fulfilment form, illustrated in the Figures 1, 2, 3 and 4.
- Figure 1 shows the block scheme of the encoder and evidences the main functions carried out thereby, sufficient for explaining the invention;
- Figure 2 shows a tipical example of the manner in which a video signal processor can generate words having different lengths and with a non-uniform rate (Figure 2a); this rate non-uniformity is mantained and generally increased when the variable length words are packaged for forming fixed length words (Figure 2b).
- Figure 3 shows the case in which three different processing paths (N=3) are used and the three buffers foreseen on the transmission side, the corresponding buffers in the reception side, and further the transmission path intended wholly are shown schematically;
- Figure 4 shows, considering three processing paths, the related time axes with the indication of the time intervals during which the data are stored, these data allowing the formation of the data packages, all having the same length in terms of bit number, these packages using the buffers, in which they are stored temporaneously, and must be transmitted on the transmission line.

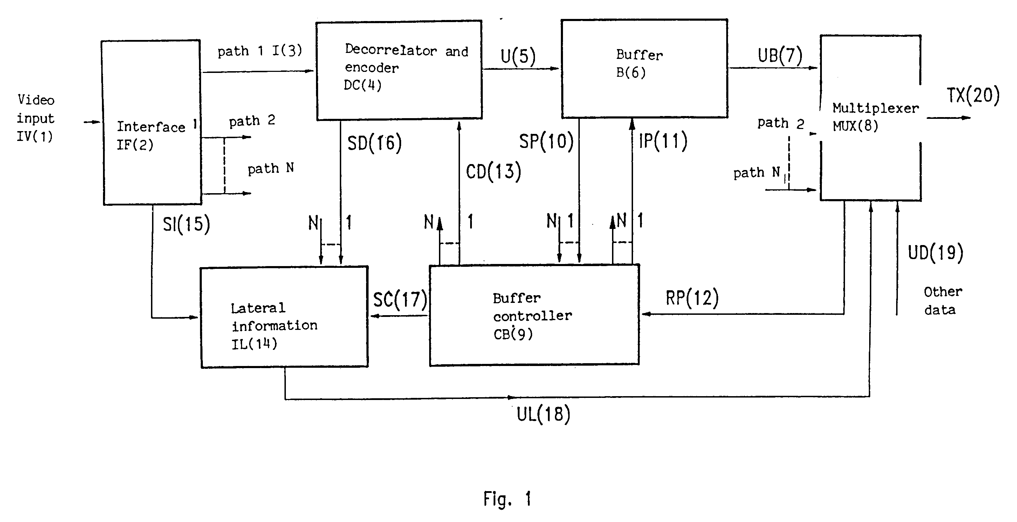

The invention is explained better by the description of a particular fulfilment form thereof, making reference to the Figure 1.

This figure shows schematically the encoder structure. This figure is sufficient for explaining also the manner in which the decoder runs, the decoder being described only in the details that are considered necessary. Generally the tipical functions developped within the blocks of Figure 1 are well-known; see for example "S. Cucchi, F. Molo, DCT based television codec for DS3 digital transmission", preprint No. 130-12, 130th SMPTE technical conference, October 15-19, 1988, New York.

The input IV(1) shown in Figure 1 receives the data flow representing the colour audio signal in numerical form. The input words correspond to the information of the three components forming the video signal, usually these components are Y (luminance) and the two differences R-Y (red minus luminance) and B-Y (bleu less luminance).

The interface IF(2) carries out the subdivision of the data flow onto N paths, each of these paths corresponding to a sole of the N zones in which the whole image is divided, by means of horizontal or vertical subdivisions. Further this interface supplies further obvious and well-known functions, not pertaining to the present description of the invention. The data speed in each of N paths is now reduced to one nth of the input data speed.

Now it is made reference to any of the N paths: for example, in the case of the first path I(3), the data pass to the block DC(4). This block carries out the typical operations of the redundancy reduction systems; in particular the data are decorrelated, using e.g. the differential PMC of the Cosine Discrete Transform, and then they are encoded for the transmission. Among the possible data encoding methods used in the transmission, it is interesting, within the scope of the present invention and how more general case, to use the methods generating the data organized in fixed length words, but with a time-non-uniform rate at the output U(5) of the encoding block.

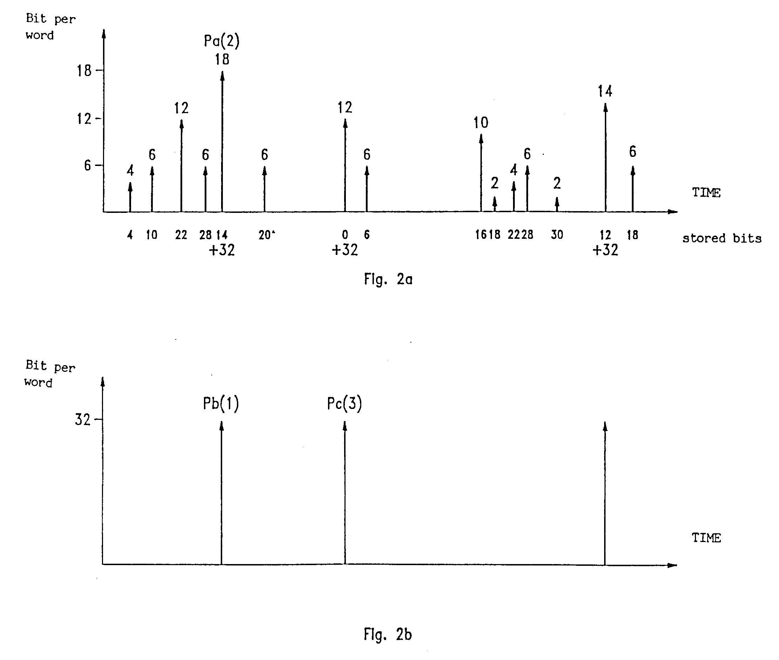

For explaining better this concept, it is made reference to the Figure 2. The Figure 2 shows the words generated by an encoder using a variable length code by vertical lines. This encoder encodes also the null data sequences and attributes to them the different length words, corresponding to the number of zeroes formimng the same sequences. This procedure generates the encoding words with an irregular rate over time, as the word is generated in conjunction with the last zero of the sequence and the sequence length obviously is not constant. Further for making easier the data transfer in the system inside and to the transmission line, it can be necessary to organize the variable length words with fixed length words, how it is illustratated in Figure 2b. This example shows that the fixed length words are formed by 32 bit: the first of these words is formed by 32 bit Pb(1) holding the first four words and a part of the fifth word Pa(2) with variable length shown in Figure 2a. The remaining part of the word Pa(2) added to the following words are held, until the saturation of its capacity equal to 32 bit, into the second fixed length word Pc(3). It is supposed that, how it is made in the practical fulfilments, that the variable length code has some characteristics suitable for allowing the separation, in the decoder, of the single variable length words, starting from the fixed length words. This compacting of the variable length words, just generated with a non-uniform rate, causes the highly irregular generation rate of the fixed length words at the output U(5). As the statistic distribution of the lengths of variable length words depends on the complexity of the encoded image zone, finally this complexity depends also on the generation rate of the fixed length words.

The situation present at the output U(5) of Figure 1 of the block DC(4) is related to the first one of N paths in which it is subdivided the original data flow. A similar situation is shown at the outputs of remaininng N-1 blocks of decorrelation and encoding, and for each of them the generation rate of the fixed length words is a function of the complexity of the image zone to which the corresponding path is referred. Therefore each one of the N paths is characterized by a different generation rate of the fixed length words, this rate varying over time according to the structure of the encoded image.

The fixed length words are stored into the buffer memory B(6) (buffer) from which they are drwan by means of the connection UB(7) for being multiplexed by the multiplexer MUX(8) with the words coming from the other N-1 paths. The number of words drawn within the time unit in conjunction to each path is non-constant over time.

The decoder carries out the operations inverse to the formerly described operations and therefore it is also organized by means of N paths. It is necessary that the words coming from the encoder are redistributed in a correct manner among the N paths of the decoder. This can be obtained only supplying the fixed length words with a suitable address identifying the provenance path.

For limiting the added redundancy for supplying this address, it can possible to increase the dimension of the single fixed length words, but this can cause the increasing of connections among decorrelator, buffer and multiplexer with unwished effects on the fulfilment circuit complexity. As alternative it can possible to group many fixed length words coming from each single path for forming a package; each package is formed by a prefixed number of fixed length words, for example 100 words, and it is supplied with a further initial identifying word (heading) that holds the address of the source and destination paths. On principle the dimensions of the package can be variable, but for making easier the multiplexing and organization operations of the transmission frame, they are supposed as constant. In particular it is necessary to foresee the introduction of the schemes protecting the information from the errors introduced by the channel: for example it can be used the block codes for the correction and/or the error survey and the data are organized according to interlaced structures (interleaving). The dimensions and the structure of packages can be established according to these schemes of error protection for optimizing its practical fulfilment and its efficiency.

In the following it is considered as well-known that the packages coming from the different sources are eventually completed with some error protection words (for example in the same multipler) keeping all packages within the same dimension.

The multiplexer works onto the packages, or the minimum unit that is transferred by one of the N buffers to the multiplexer MUX(8) is formed by a package. As consequence of the time-variable rate, wich each one of the N paths generates the fixed length words, is the non-constant rate, and it is a function of the complexity of the processed image zone, by which each path generates the information packages. Further each package can correspond to a more o less extended image area, always according to its complexity. The buffer controller, the block CB(9) works for assuring that each buffer does not arrive to the complete emptying conditions (underflow) or overload (overflow) and that the packages hold therewithin are drawn from the multiplexer according to the time order with which its generation was started. Each time it is started the generation of a new package in the inside of one of the N buffers, this event is signaled by means of the connection SP(10) to the buffer controller. Then the controller provides to supply, by the connection IP(11), the information of package heading, holding the address of the source and destination path and to store the same informations in its inside. When the multiplexer requires the transmission of a new package by means of the connection RP(12), the controller can establish the availabile package of older generation time and can order, by means of the connection IP(11), to the buffer of the related path to make the transfer of the above mentioned package to the multiplexer.

In the case in which more packages start to be formed contemporaneously in two or more of the N paths, the arbitrary assignment of the transmission order to these package does not cause underflow problems in the decoder side, owing to the presence of a suitable buffer therewithin, whose existance is in any case necessary.

According to the situation of buffer seizure, the controller provides further to change, by means of the connection CD(13), the running mode of the decorrelator/encoder with the aim of adapting the generated information flow. Generally speaking, the lateral information block UL(18) and for example the video sources (connection UD(19)) generate the data with a fixed bit rate and greatly under the bit rate of the transmission line (output Tx(20); the remaining part of the line bit rate is filled with the video data, whose mean bit rate is controlled as indicated above.

The control of the buffers corresponding to the N paths can be made according to different modalities, according to the applied compromises. In particular the buffers can be controlled singularly. In this case, if each buffer has a capacity equal to M.P. package, the controller causes the summation of seizures of the various buffers never to execeed the limit MP and the decorrelators/encoders to work with the same precision. This solution does not allow an optimal use of the total buffer capacity, equal to MNP, but allows a notable simplification of the buffer controller.

As alternative the control of the single buffers can be carried out as it were a sole buffer, operating onto the single decorrelators/encoders or it is possible to use a sole buffer joined to the outputs of the N decorrelators/encoders. These solutions allow to optimize the dimensions of the buffer memory, but increasing the controller complexity and can be advantageous in the case of an high N value.

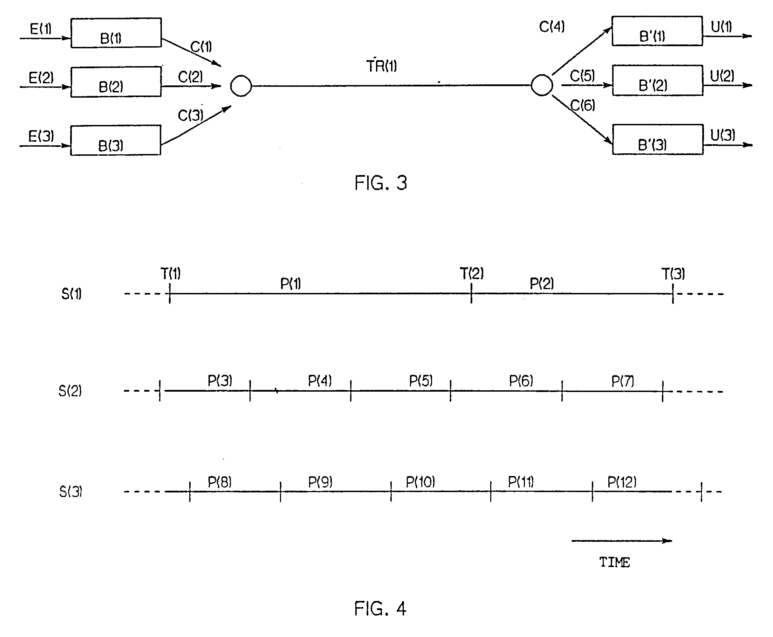

As the normal knowledges of the package transmission of informations coming from more sources are not satisfying for explaining the running of the codec of Figure 1 when the video signal is processed onto more processing paths, each path being supplied with buffer, further details are given in the following with specifical reference to the running manner of the buffers connected in transmission and in reception onto the N processing paths of the video signal and making reference to the Figures 3 and 4.

The Figure 3 is drawn under the hypotesis that 3 video signal processing paths are present and B(1), B(2), B(3) show the buffers connected in the encoding side onto the three processing paths where the data flows enter respectively the inputs E(1), E(2), E(3); these data flows have for example the structure indicated in Figure 2b and hold the words that supply the package heading suitable allocated over time, so that the package-built data enter the transmission buffers, even when words forming the package enter the buffers with a rate variable over time. The packages already stored in the buffers B(1), B82), B(3) are transmitted, according to suitable sequences and by means of the connections C(1), C(2), C(3) to the transmission path, indicated schematically in Figure 3 by means of the connection TR(1) that includes the real transmission path and the signal multiplexer and demultiplexer. In the reception side, using the connections C(4), C(5), C(6) the packages are sent, without its heading, onto the reception buffers B′(1), B′(2), B′(3). The reception buffer outputs read the data (for example the words holding 32 bit, as indicated in Figure 2b) with an irregular rate that allows to reconstruct the parts of video images in reception.

If it is considered a particular processing path, e.g. the path starting from the transmission connection E(1) and arriving to the connection path U(1) in reception, both in E(1) and U(1), neglecting the delay caused by the buffers B(1) and B′(1), and further by the transmission line, this line transmits the data on E(1) and U(1) at a mean speed got in a short period, with a rate R1 variable over time but equal with one another. In other terms, if we consider the data speed (bit per second) on the connection E(1) for a certain part of television image, when the same part of television image is reconstructed in reception, then in this instant the data speed on the connection U(1) is equal to the speed present in E(1) for the same part of television image.

Then in the following the criterium of contemporaneity shall be referred to the above explained criterium. A similar reasoning can be used in the other two processing paths of the signal indicated in Figure 3. If we indicate with Oi (i = 1, 2, 3) the seizure (bit number) of the buffer B(1) and with R(i) the variable data on the path R(i), and further we indicate with Oi′ the seizure of buffers B′(i), the delay ΔO, introduced by the buffers onto the generical path of index i , is given by the expression: 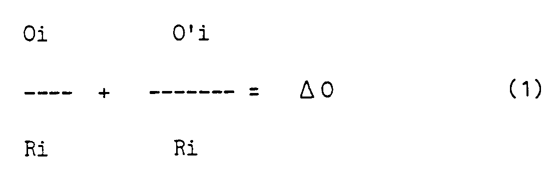
However the values of Ri, Oi and Oi′ are generally different onto three processing paths, the delay value ΔO is equal for the three paths and constant over time. In fact if the three image parts corresponding to the three paths are processed contemporaneously in transmission, they are also processed contemporaneously in reception, therefore the data present in the same instant (excepting little flowings over time, due e.g. to the storage of data in words holding 32 bit and that are stored by the buffers) onto the paths E(i), these same data must be shown in the same time (contemporaneously) on the paths U(i).

The equation (1) supplies really 3 equations for the 3 values of the index i and, summing the three equations, it can be obtained:

$\text{Oo + Oo' = Ro · Δo (2)}$

where $\text{Ro = R1 + R2 + R3}$ , $\text{Oo = O1 + O2 + O3}$ , $\text{Oo' = O1′ + O2′ + O3'}$ . Ro is the data speed in line (or at least the part of the line speed provided for the video data) and it is constant. Now the product Ro · Δo is constant, therefore it is obtained that the total seizure of buffers in transmission and reception are complementary with one another, that further assures a constant value of the transmission delay due to the total buffers of transmission and reception. The manner for controlling the seizure value of Oo (and then, as consequence, the value of Oo′) is shown in the above mentioned article by S. Cucchi and F. Molo.

The values of Oo, Oo′, Oi, Oi′ and Ri are generally variable over time, but generally the equations (1) and (2) remain valid. In greather detail, being Ro a constant value, the equation:

$\text{Ro = R1 + R2 + R3}$

is valid only in the long period. When the mean complexity of the television image changes, the speeds R1, R2, R3 change, also suddenly, and the above mentioned equation is no more valid in the short period and the difference between the summation of R1, R2 and R3 and the value of Ro is absorbed by the variations of transmission buffer filling, in particular by the variation of Oo and this variation is used on its turn as feedback for the blocks DC(4) of Figure 1 for increasing or reducing the data generation speed.

The equation (1) shows that each single Oi can approach to the maximum allowed value of Oo, in relation to the values assumed by the Ri, therefore each of the three buffers B(i) must have a capacity equal to the maximum allowed capacity, that is to say the maximum value Oo.

A further binding of the values of Oi, Oi′ and Ri is obtained considering the Figure 4. This figure represents by S(1), S(2), S(3) the three time axes related to the inputs E(1), E(2), E(3) or the outputs U(1), U(2), U(3) and in each axis the time intervals necessary for forming the data packages are limited by vertical lines. For example, in the first path in which the time axis is indicated by S(1), the data package is filled in the time elapsed from T(1) and T(2), the package P(2) is filled in the time elapsed from T(2) and T(3) and similarly for the packages hold in the other paths. Now, if we consider a static condition, in which the data are generated at speed Ri on the three axes S(i), and the data are not sent onto the transmission line TR(1) of Figure 3, the data are stored into the transmission buffers B(i), so that at each instant it is satisfied the equation group: 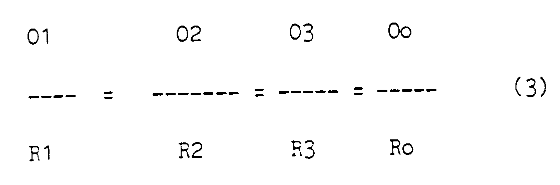
When it is started the data transmission onto the transmission path TR(1), shown in Figure 3, it is necessary to transmit the data related to the three paths S(i) with speed Ri, and this can be made ordering the whole packages onto the three paths, as regards the order of its transmission onto the transmission line, or according to its order of initial generation time (time T(1) for P(1) in Figure 4) or according to the completion time (T(2) for the package P(1)). The conditions (3) can be achieved also by the following reasoning: each value Oi can be assumed in general as a function of the related value Ri and further in the generical time To an information proportional to Ri must be transmitted in line in each path; the conditions (3) are now achieved imposing that the sum-mation $\text{O1 + O2 + O3}$ is minimum under the condition that, in the generical time To, an information is transmitted to ( $\text{R1 + R2 + R3}$ ). To, and further imposing that Oi tends to zero with Ri. A similar reasoning can be made on the reception path, obtaining the following condition: 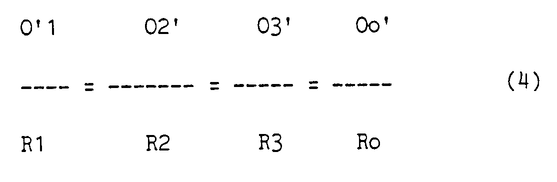
The equations (3) and (4), in which all variable quantities are variable over time, remain valid in normal running conditions, not considering the data variations in the short period, and are in any case sufficient, together with the equations (1) and (2) to outline a control strategy of buffers (intended on the whole) in transmission and reception.

As reagrds the modalities of package transmission it is remarkably more convenient its transmission according to the corresponding ordering at the start of its generation. In this case it is necessary to control the filling condition of each buffer B(i) on the transmission side, so that in each one of the buffers the filling higher than a package is achieved. This can be obtained in transmission accelerating the generation of the package by means of the insertion of redundancy data that can be recognized and then eliminating these data in the corresponding reception buffer, in this manner accelerating artificially the speed R(i). A similar provision can be used in transmission onto the buffer considered on the whole.

The buffers foreseen in the reception side do not require particular provisions, as in the moment the single words of a package are inserted onto a reception buffer, they can be used immediately.

In the case in which we use, instead of a single buffer for each processing path, as indicated in Figure 1, a single buffer in commom to all processing paths, the control criteria of the buffer similar to the above mentioned criteria can be used. In particular the buffer is made in a structure holding sequencially ordered packages, and each package is assigned to a single processing path at the instant in which this package starts to be formed, being so formed, in the buffer inside, an ordering of packages according to to the generation start time of the same packages. As regards the transmission of packages onto the transmission line, they are transmistted simply according to the just assigned ordering; it is necessary to apply the precaution of accelerating the generation of a package before its transmission on the line, or when few packages precede it in the transmission order onto the transmission line. The disdvantage of using a sole buffer as alternative to the single buffers in each processing path is the loss of the modularity in the buffer inside, and further the introduction of informations into the buffer is contested by N processing paths, being so complicated the access control of the information buffer, and further the buffer must operate at an higher speed both in writing and in reading phases.

The block related to the lateral information IL(4) collects all informations coming from the various blocks forming the encoder by means of the connections SI(15), SD(16), SC(17) coming respectively from the input interface, from N decorrelation/encoding paths and from the buffer controller. These data can be transmitted to the multiplexer MUX(8) by means of the connection UL(18) and be organized as packages in the same format and dimensions of the packages holding the video informations: the provenance of the various packages can be established by means of the use of a suitable heading. Similarly other ancillary and/or audio informations can be organized in packages of the same format and sent to the multiplexer MUX(8) by means of the input UD(19). In the inside of packages coming from the sources of different type, as video, audio sources, etc., different criteria can be used for the data organization and different codes can be used for the error protection, so that they are suited to the particular source characteristics. The multiplexer MUX(8) can be foreseen for treating all package types, according to the transmission path onto the channel, it can interact by means of the connection RP(12) with the buffer controller CB(9). In this manner the system can be adapted to the different transmission speeds.

The transmission frame holds a frame alignment word, some words for the ancillary services (for example a phonic service channel) and the data related to the video signal, to the lateral informations and audio channels, all of them being organized under the form of packages. The priority assigned in transmission is different for the different package types, being for example convenient to assign a higher priority to the lateral information and lower priority to the video data. It must be noticed that, in any case, excepting the data related to the video signal, the other data, such as the audio channels and the lateral data that send in reception the information related to the encoder running mode, require a fixed line bit rate, that is a fraction of the bit rate of the line Ro, and the remaining part of Ro is assigned to the video signal coming from the adapted sources, that is to say, it is adapted for filling totally the remaining part of Ro. What above mentioned shows the necessity of assigning the higher transmission priority to the signals that occupy (in mean value) a fixed part of the line bit rate.

The priority to be assigned to the inside of the data coming from the sources generating a fixed bit rate shall be established on the basis of transmission delays, that these data can support. The multiplexer MUX(8) develops the typical functions of the multiplexer and in particular, using a suitable interface, provides the transmission of the data, serialized and encoded according to the preset line code, to the output TX(20).

As above described, the decoder has an organization dual with respect to the encoder organization. In particular the incoming packages are shunted correctly according to the address hold in the heading, but the buffer controller must keep under control the filling condition of the different buffers and causes the filling to be complementary to the filling of encoding side buffers.

## Claims

1. A method for transmitting television signals, based on the bit rate reduction and in which the transmission side receives the signals to be transmitted onto the transmission line coming from at least two sources, one of which sources is necessarily the one generating the compressed data related to the video image, the second being a source generating the data describing the state variable over the time of the machine reducing the bit rate of the video signal and/or the source supplying an audio signal under the digital form, these data sources generating the data at a speed variable over time or in any case with speeds that are not correlated in a simple manner, characterized in that:
- at the transmission side, the data to be transmitted and generated by two or more sources are structured in packages having an equal length (bit number) and are provided with suitable heading (address) that is used for individualizing at least the source to which the packages belong, these packages being supplied to the transmission line according to a transmission priority;
- in the reception path the addresses of the package are recognized and transmitted onto the paths corresponding to the transmission path.

2. A method according to claim 1, characterized in that the data packages, formed by data coming from the related sources and under the form of series of binary values or series of words having assigned lengths, are added with words having the aim of making the protection of errors caused by the transmission line.

3. A method according to claims 1 and 2, characterized in that the line multiplexer frame holds an integral number of packages coming from the data sources, so that at reception end the recognizing of the transmission frame on the line allows to individualize easily the heading of packages and thus their sorting to the processing paths corresponding to the relevant data source in transmission.

4. A method for transmitting television signals based on the bit rate reduction, in which the data of the video source to be processed are shunted onto N processing paths (N ≧ 2), in which each path must now process the data at a speed N-times lower than the speed of the video source and, downstream the processing, each path generates data at a different speed, the data generated by the N sources of processed data must be sent onto the transmission line together with the data coming from other data sources that can be the source of data describing the state of the bit rate machine, both globally and considering the N processing paths, or the source of data related to the audio channels or other signals, characterized in that:
- at the transmission end at least the data coming from the N processing paths are grouped, in each single path, under the form of packages having an equal length and supplied with suitable heading used for individualizing at least to which of the N processing paths the package is related, these packages being sent onto the transmission line using a line multiplexer, having a priority assigned to each of the N paths, corresponding to the time order with which the data of the single packages have started to be stored in the package related to each processing path;
- on the reception path the source address among the N transmission processing sources is recognized by the reception demultiplexer that provides to send the package onto the reception processing path corresponding to the transmission path.

5. A method according to claim 4, characterized in that both for the N processing paths of the video signal and for the sources of the other data, some packages having equal length are formed (number of information bits), supplied each with a heading specifying at least the source that has originated the package, these packages being transmitted onto the transmission line by a suitable line multiplexer, according to a further priority order assigned to the assembly of the processed N video data sources and singularly to the other sources of data to be transmitted onto the transmission line.

## Patentansprüche

1. Verfahren zum Übertragen von Fernsehsignalen mit Bitraten-Verringerung, wobei die Sendeseite die auf die Übertragungsleitung zu gebenden Signale von mindestens zwei Quellen empfängt, von denen eine notwendigerweise diejenige ist, die die auf das Fernsehbild bezogenen komprimierten Daten erzeugt, und die zweite eine Quelle ist, die die Daten erzeugt, die den zeitlich änderbaren Zustand der die Bitrate des Videosignals verringernden Vorrichtung beschreiben, und/oder diejenige Quelle ist, die ein Audiosignal in digitaler Form bereitstellt, wobei diese Datenquellen die Daten mit einer zeitlich änderbaren Geschwindigkeit oder jedenfalls mit nicht in einfacher Weise korrelierten Geschwindigkeiten erzeugen, dadurch **gekennzeichnet**,
daß auf der Sendeseite die zu übertragenden und von zwei oder mehr Quellen erzeugten Daten in Paketen mit gleicher Länge (Bitzahl) strukturiert und mit einem geeigneten Kopf (Adresse) zur Individualisierung mindestens der Quelle, zu der die Pakete gehören, versehen werden, wobei diese Pakete entsprechend einer Übertragungspriorität der Übertragungsleitung zugeführt werden, und
daß in dem Empfangspfad die Adressen der Pakete erkannt und entsprechend dem Übertragungsweg auf die Pfade gegeben werden.

2. Verfahren nach Anspruch 1, dadurch **gekennzeichnet**, daß den Datenpaketen, die aus von den jeweiligen Quellen stammenden Daten in Form von Folgen von Binärwerten oder von Wörtern zugehöriger Längen gebildet werden, Wörter hinzugefügt werden, die einen Schutzes gegen durch die Übertragungsleitung verursachte Fehler ergeben sollen.

3. Verfahren nach Anspruch 1 und 2, dadurch **gekennzeichnet**, daß der Leitungs-Multiplexerrahmen eine ganze Zahl von Paketen, die von den Datenquellen kommen, aufnimmt, so daß auf der Empfangsseite das Erkennen des Übertragungsrahmens auf der Leitung es gestattet, den Kopf der Pakete leicht zu individualisieren und diese entsprechend der jeweils sendenden Datenquelle den Verarbeitungspfaden zuzuteilen.

4. Verfahren zum Übertragen von Fernsehsignalen mit Bitraten-Verringerung, wobei die zu verarbeitenden Daten der Videoquelle auf N (N ≧ 2) Verarbeitungspfade parallel gegeben werden, wobei jeder Pfad nun die Daten mit einer Geschwindigkeit verarbeiten muß, die N-mal kleiner ist als die Geschwindigkeit der Datenquelle, und anschließend an die Verarbeitung Daten mit einer anderen Geschwindigkeit erzeugt, wobei die Daten, die von den N Quellen von verarbeiteten Daten erzeugt werden, gemeinsam mit denjenigen Daten auf die Übertragungsleitung gegeben werden müssen, die von anderen Datenquellen kommen, bei denen es sich um die Quelle von Daten handeln kann, die den Zustand der Bitraten-Vorrichtung sowohl global als auch im Hinblick auf die N Verarbeitungspfade beschreiben, oder um die Quelle von Daten, die sich auf die Audiokanäle oder sonstige Signale beziehen, dadurch **gekennzeichnet**,
daß auf der Sendeseite mindestens die von den N Verarbeitungspfaden kommenden Daten in jedem einzelnen Pfad in Form von Paketen gleicher Länge gruppiert und mit einem geeigneten Kopf versehen werden, der zur Individualisierung mindestens desjenigen der N Verarbeitungspfade dient, auf den sich das Paket bezieht, wobei diese Pakete unter Verwendung eines Leitungsmulitplexers auf die Übertragungsleitung mit einer jedem der N Pfade zugeordneten Priorität entsprechend der zeitlichen Ordnung gegeben werden, in der begonnen wurde, die Daten der einzelnen Pakete in das auf den betreffenden Bearbeitungspfad bezogene Paket einzuspeichern, und
daß am Empfangspfad diejenige der N Übertragungs-Verarbeitungsquellen von dem Empfangs-Demultiplexer erkannt wird, der dazu dient, das Paket auf den dem Übertragungspfad entsprechenden Empfangs-Verarbeitungspfad zu geben.

5. Verfahren nach Anspruch 4, dadurch **gekennzeichnet**, daß sowohl hinsichtlich der N Verarbeitungspfade des Videosignals als auch der Quellen der anderen Daten einige Pakete mit gleicher Länge (Anzahl von Informationsbits) gebildet und jeweils mit einem Kopf versehen werden, der mindestens die Quelle angibt, von der das Paket ausgeht, wobei diese Pakete über einen geeigneten Leitungsmultiplexer auf die Übertragungsleitung entsprechend einer weiteren Prioritätsordnung gegeben werden, die der Gruppe von N Quellen für verarbeitete Videodaten sowie einzeln den Quellen der anderen auf die Übertragungsleitung zu gebenden Daten zugeordnet ist.

## Revendications

1. Procédé de transmission de signaux télévisuels, fondé sur la réduction du débit binaire et dans lequel le côté émission reçoit d'au moins deux sources les signaux à transmettre sur la ligne d'émission, une première de ces sources étant forcément celle qui produit les données comprimées concernant l'image vidéo, la seconde étant une source produisant les données décrivant l'état, variable avec le temps, du dispositif de réduction du débit binaire du signal vidéo et/ou la source fournissant un signal audio sous forme numérique, ces sources de données produisant les données à une vitesse variable dans le temps ou, de toute manière, avec des vitesses qui ne sont pas mises en corrélation d'une manière simple, caractérisé en ce que:
- du côté émission, les données à transmettre et produire par au moins deux sources sont structurées en paquets de longueur (nombre de bits) égale et comportent un en-tête (une adresse) approprié servant à individualiser au moins la source à laquelle appartiennent les paquets, ces paquets étant appliqués à la ligne d'émission selon une priorité de transmission;
- sur le parcours de réception, les adresses des paquets sont reconnues et transmises sur les parcours correspondant au parcours de transmission.

2. Procédé selon la revendication 1, caractérisé en ce que les paquets de données, formés par des données provenant des sources correspondantes et sous la forme de séries de valeurs binaires ou de séries de mots de longueurs attribuées, sont additionnés avec des mots servant à réaliser la protection d'erreurs provoquées par la ligne d'émission.

3. Procédé selon les revendications 1 et 2, caractérisé en ce que le bloc du multiplexeur de ligne contient un nombre entier de paquets provenant des sources de données, de façon qu'à l'extrémité de réception la reconnaissance du bloc de transmission sur la ligne permette d'individualiser facilement l'en-tête des paquets et donc de les répartir entre les circuits de traitement correspondant à la source appropriée de données en transmission.

4. Procédé de transmission de signaux télévisuels fondé sur la réduction du débit binaire, dans lequel les données de la source vidéo à traiter sont dérivées vers N circuits de traitement (N≧2), chacun de ces circuits devant maintenant traiter les données à une vitesse N fois inférieure à la vitesse de la source vidéo et, en aval du traitement, chaque circuit produit des données à une vitesse différente, les données produites par les N sources de données traitées doivent être envoyées sur la ligne d'émission conjointement avec les données provenant d'autres sources de données qui peuvent être la source de données décrivant l'état du dispositif de réduction de débit binaire, à la fois globalement et en considérant les N circuits de traitement, ou la source de données correspondant aux canaux audio ou d'autres signaux, caractérisé en ce que:
- à l'extrémité d'émission, au moins les données provenant des N circuits de traitement sont groupées, dans chaque circuit individuel, sous la forme de paquets ayant une longueur égale et dotés d'un en-tête approprié servant à individualiser au moins celui des N circuits de traitement auquel correspond le paquet, ces paquets étant envoyés sur la ligne d'émission à l'aide d'un multiplexeur de ligne, ayant une priorité, ayant une priorité attribuée à chacun des N circuits, correspondant à l'ordre chronologique selon lequel les données des paquets individuels ont commencé à être stockées dans le paquet correspondant à chaque circuit de traitement;
- sur le circuit de réception, l'adresse de source parmi les N sources de traitement de transmission est reconnue par le démultiplexeur de réception qui sert à envoyer le paquet sur le circuit de traitement de réception correspondant au circuit d'émission.

5. Procédé selon la revendication 4, caractérisé en ce que pour les N circuits de traitement du signal vidéo aussi bien que pour les sources des autres données, il se forme quelques paquets de longueur (nombre de bits d'informations) égale, dotés chacun d'un en-tête indiquant au moins la source à l'origine du paquet, ces paquets étant transmis sur la ligne d'émission par un multiplexeur de ligne approprié, selon un nouvel ordre de priorité attribué à l'ensemble des N sources de données vidéo traitées et, individuellement, aux autres sources de données à transmettre sur la ligne d'émission.
